# NEUE EUROPÄISCHE PATENTSCHRIFT

(11) **EP 0 350 628 B2**
(45) Veröffentlichungstag und Bekanntmachung des Hinweises auf die Entscheidung über den Einspruch: **10.03.1999**
(45) Hinweis auf die Patenterteilung: 02.09.1992
(21) Anmeldenummer: 89110634.6
(22) Anmeldetag: 12.06.1989
(51) Int. Cl.: B05B 15/04, B01D 50/00, B01D 45/12

(54) **Verfahren und Vorrichtung zur Rückgewinnung von überschüssigem Pulver aus Pulverbeschichtungskabinen**
Process and device for the recovery of residual powder from powder-coating boots
Procédé et dispositif pour la récupération des poudres résiduaires dans des installations de revêtement par poudre

(30) Priorität: 14.07.1988 DE 3823924; 14.06.1988 DE 3820258
(43) Veröffentlichungstag der Anmeldung: 17.01.1990
(73) Patentinhaber: NORDSON CORPORATION, Westlake, OH 44145 (US)
(72) Erfinder: Krämer, Erich, D-96247 Michelau (DE)
(74) Vertreter: Findlay, Alice Rosemary

(56) Entgegenhaltungen:
- DE-A- 1 962 698
- DE-C- 3 704 551
- DE-U- 8 706 964
- US-A- 2 745 725
- US-A- 4 730 647
- Nordson UK Limited, Datenblatt NUK 1029

## Beschreibung

Die Erfindung betrifft ein Verfahren und eine Vorrichtung zur Rückgewinnung von überschüssigem Pulver aus der Kabine einer Pulverbeschichtungsanlage, wobei das überschüssige Pulver mittels eines Ventilators aus der Kabine über Zyklone abgesaugt wird.

Beim Pulverbeschichten von Gegenständen in Pulverbeschichtungskabinen wird das überschüssige Pulver aus den Kabinen abgesaugt und nach einer Filtierung wiederverwendet.

Das Pulver-Luft-Gemisch wird hierbei aus der jeweiligen Kabine in einen Zyklon eingeleitet, in welchem das Pulver abgeschieden wird und nach unten sinkt, wobei es z.B. in einen fahrbaren Behälter, einen sogenannten Pulverwagen, ausgetragen wird.

Es hat sich nun gezeigt, daß die Abscheidung des Pulvers im Zyklon z.B. dann Schwierigkeiten bereitet, wenn momentan größere Pulvermengen von der Kabine in den Zyklon eingeleitet werden, was z.B. beim Abreinigen oder Auskehren der Kabine auftreten kann.
In solchen Fällen wird eine derartige größere Pulvermenge, etwa ein Pulverklumpen, nicht ausreichend vom Zyklon erfaßt und es kann vorkommen, daß Ablagerungen entstehen und das Pulver direkt über die Absaugung ausgetragen wird und damit verloren geht.

Aus der DE-A-37 04 551 ist eine Pulverbeschichtungsanlage mit einer Sprühkabine und einem dieser nachgeschalteten Zyklon zur Rückgewinnung von überschüssigem Pulver bekannt. Die Rückwand der Kabine ist hier trichterförmig ausgebildet, wobei der Ausgang der Kabine über ein zylindrisches Rohr mit dem Eingang des Zyklons verbunden ist. Eine Beschleunigung des Pulvers zwischen dem Ausgang der Kabine und dem Eingang des Zyklons ist nicht möglich, da die die Kabine und den Zyklon verbindende Rohrleitung zylindrisch ausgebildet ist. Ebensowenig ist eine Beschleunigung im Bereich der trichterförmig ausgebildeten Rückwand der Kabine kaum erreichbar, da der Trichter einen sehr großen Öffnungswinkel hat und die Rückwand auch eben ausgebildet sein kann.

DE-U-87 06 964 zeigt eine Vorrichtung zur Rückgewinnung von Pulver aus einem Pulver/Luftgemisch, das aus einer Kabine einer Pulverbeschichtungsanlage abgesaugt wird. Die Vorrichtung weist drei Zyklone auf, deren Eingangsseiten mit einer gemeinsamen Leitung verbunden sind und die sich nach außen in Strömungsrichtung verjüngen, um die Strömung zu verzögern.

Nordson (UK) Limited, ein britisches Unternehmen und Tochterunternehmen von Nordson Corporation, Ohio, USA, hat die Verwendung eines Leitungsübergangsstücks zwischen einer Pulversprühkabine und einem Zyklonabscheider vorgeschlagen, um die Strömung von Luft und Pulver in den Zyklon zu beschleunigen, und diese Anordnung ist in Verkaufsliteratur von Nordson (UK) Limited mit Datum vom 27. Januar 1988 beschrieben.

Der Erfindung liegt nun die Aufgabe zugrunde, ein Verfahren und eine Vorrichtung der eingangs genannten Art so weiterzubilden, daß das Pulver von der Kabine im wesentlichen kontinuierlich dem Zyklon zugeführt werden kann.

Nach der Erfindung wird dies erreicht, durch ein Verfahren gemäß den Merkmalen des Anspruchs 1.

Eine geeignete Vorrichtung zur Durchführung dieses Verfahrens ist in den Merkmalen des Anspruchs 3 beschrieben.
Die Länge der Beschleunigungsstrecke kann beispielsweise 0,7 - 2,0 m, vorzugsweise etwa 0,8 - 1,0 m betragen, wobei für gröbere Körnung die längeren Beschleunigungsstrecken vorgezogen werden.

Durch die Beschleunigung des Pulvers, z.B. eines Farbpulvers, auf dem Weg von der Kabine zum Zyklon wird eine im wesentlichen gleichmäßige Abscheidung des Pulvers erreicht und das Pulver erhält beim Eintritt in den Zyklon eine ausreichend hohe Einströmgeschwindigkeit.
Hierdurch werden Pulververluste vermieden und ein sehrguter Selbstreinigungseffekt der Pulverwege erreicht. Es kann hierbei jedes handelsübliche Beschichtungspulver auch unterschiedlicher Dichte im Zyklon voll abgeschieden werden.
Das Pulver wird aus der Beschichtungskabine über einen Ansaugkanal angesaugt, wobei zweckmäßigerweise zur Absiebung des Pulvers am Ende des Ansaugkanales vor der Beschleunigungsstrecke ein Sieb z.B. eine Siebplatte oder eine Siebpatrone eingebaut ist.
In der Außenwand des Ansaugkanales ist ferner eine schwenkbare Klappe eingebaut, durch welche in einer Endstellung der Ansaugkanal gesperrt und eine Verbindung nach außen zu einem Flusenbehälter geöffnet ist, während in der anderen Endstellung der Klappe die Verbindung zum Flusenbehälter geschlossen und der Durchgang durch den Ansaugkanal geöffnet ist.

Hierdurch ist es möglich, das aus der Kabine abgesaugte und rückgewonnene Pulver bereits vordem Zyklon abzusieben und Grobstäube, Fremdpartikel oder Flusen von dem wiederzuverwendenden Pulver zu trennen.

Bei der Absaugung über den in der Kabine angeordneten Ansaugkanal wird nicht das gesamte überschüssige Pulver erfaßt da ein Teil des überschüssigen Pulvers auf den Boden der Kabine fällt.

Dieses auf den Boden fallende Pulver wird vorteilhafterweise mittels zugeführter Luft aufgelockert und dann nach außen abgeführt.

Zweckmäßigerweise ist hierzu der Boden der Kabine geneigt und im Abstand über dem Boden ist ein feinmaschiges Gewebe angeordnet, auf welches das in der Kabine herabsinkende Pulverfällt. In den Raum zwischen dem Boden und dem zu diesem im wesentlichen parallelen Gewebe wird Luft eingeführt zur Auflockerung des auf dem Gewebe sich absetztenden Pulvers.

Um eine gute Fließfähigkeit des Pulvers auf dem Gewebe zu erzielen, beträgt die Neigung des Bodens etwa 8-15°, vorzugsweise etwa 10-12°. Auch größere Neigungen sind möglich.
Nach einer weiteren Ausgestaltung der Erfindung ist in der Absaugleitung zwischen dem Zyklon und dem Ventilator eine Klappe eingebaut, durch welche in einer Endstellung der Durchgang durch die Absaugleitung geöffnet ist, während in der anderen Endstellung der Klappe dieser Durchgang gesperrt und eine Öffnung nach außen zur Ansaugung von Umgebungsluft freigegeben ist.

Am Auslaß des Zyklons ist hierbei vorteilhafterweise ein Kugelventil eingebaut, dessen Ventilkugel durch den Unterdruck in der Absaugleitung in geschlossener Stellung gehalten ist, während bei gesperrter Absaugleitung die Ventilkugel infolge ihres Eigengewichtes nach unten fällt und den Auslaß des Zyklons freigibt.

Durch Umschaltung der vorgenannten Klappe wird somit ein Zyklon bzw. ein Zyklonpaar drucklos, worauf das Kugelventil öffnet, so daß das Pulver, das sich im unteren Ende des Zyklons gesammelt hat, nach außen zu einem Pulverbehälter oder Pulverwagen ausgetragen werden kann. Durch die Öffnung in der Absaugleitung kann der Ventilator Umgebungsluft ansaugen, wodurch eine Restsaugwirkung des Ventilators infolge Luftmangels vermieden wird, ebenso ein ständiges Ein- und Ausschalten des Motors, das zu Überlastungen führen könnte.
Die Zyklone werden paarweise betrieben, d.h. durch entsprechende Steuerung der Klappen der Zyklone wird ein Zyklonpaar drucklos und das Pulver kann ausgetragen werden, während das zweite Zyklonpaar weiterläuft.

Infolge dieser wechselweisen Anordnung und Steuerung kann zyklisch Pulver aus bzw. über die Zyklone rückgewonnen werden mit der vorteilhaften Folge, daß die Pulverbeschichtungsanlage kontinuierlich arbeiten kann und während der Pulverrückgewinnung nicht abgeschaltet zu werden braucht.

Zur Abscheidung von etwa noch vorhandenen Feinststäuben in der Absaugluft nach den Zyklon kann dem Ventilator vorteilhafterweise ein Bandfilter nachgeschaltet sein, auf dessen umlaufendes Filterband die noch verbleibenden Feinststäube vom Ventilator aufgeblasen werden. Diese sich dann auf dem Filterband abscheidenden Feinststäube können in einfacher aber sehr wirksamer Weise vom Filterband mittels eines Staubsaugers abgesaugt werden.

Eine beispielsweise Ausführungsform der Erfindung wird nachfolgend anhand der Zeichnung erläutert, in der
Fig. 1 schematisch eine Pulverbeschichtungskabine mit nachgeschaltetem Zyklon zeigt.
Fig. 2 zeigt schematisch eine Draufsicht auf den Zyklon nach Fig. 1.
Fig. 3 zeigt schematisch einen Teil der Kabine nach Fig. 1 in einem Schnitt quer zur Darstellung der Fig. 1.
Fig. 4 zeigt schematisch zwei Zyklonpaare, welche an die Pulverbeschichtungskabine nach Fig. 1 angeschlossen sind mit den zugehörigen Ventilatoren und einem nachgeschalteten Bandfilter zur Abscheidung von Feinststäuben.
Fig. 5 zeigt schematisch eine Mehrzahl von Zyklonen, die an eine gemeinsame Absaugleitung angeschlossen sind.
Fig. 6 zeigt schematisch eine unterhalb der Zyklone angeordnete, für mehrere Zyklone gemeinsame Austrageinrichtung.

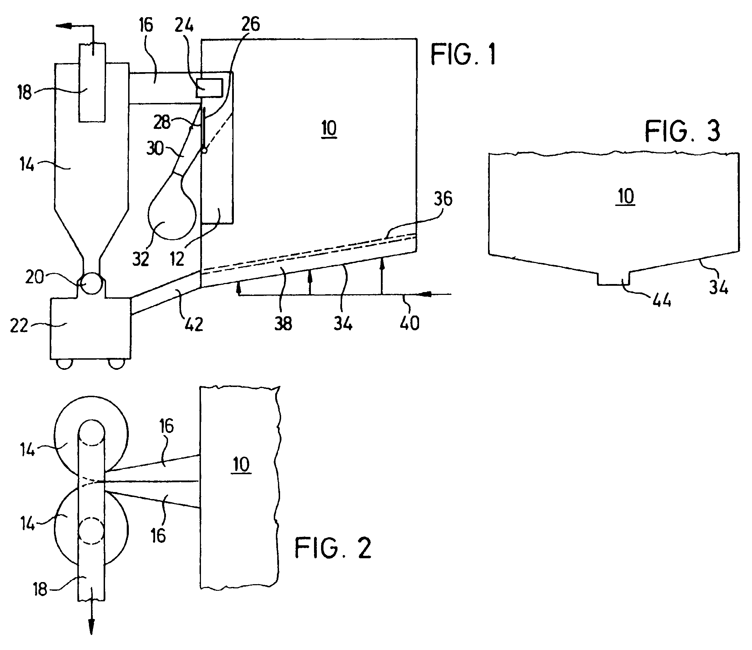

Die Fig. 1 zeigt schematisch eine Kabine 10 einer Pulverbeschichtungsanlage, wobei in der Kabine Gegenstände mit Pulver, z.B. Farbpulver, beschichtet werden.

Die Beschichtung selbst ist nicht dargestellt, ebensowenig der Einlaß für die Zufuhr des pulverförmigen Beschichtungsmaterials. Bei der Beschichtung von Gegenständen in der Kabine 10 haftet nicht sämtliches in die Kabine eingeführtes Pulver auf den Oberflächen des oder der zu beschichtenden Gegenstände, weshalb der nicht-verbrauchte überschüssige Pulveranteil aus der Kabine abgeführt und rückgewonnen wird zur Wederverwendung.

Die Kabine 10 ist mit einem Ansaugkanal 12 versehen, der sich an einer Rück- oder Seitenwand der Kabine von oben nach unten erstreckt und unten seine nicht näher bezeichnete Ansaugöffnung hat. Das obere Ende des Ansaugkanales 12 ist Ober eine Rohrleitung 16 mit einem Zyklon 14 verbunden, in welchem von oben her eine Absaugleitung 18 mündet, die zu einem in Fig. 1 nicht dargestellten Ventilator führt, durch welchen das Pulver aus der Kabine 10 über den Ansaugkanal 12 und die Rohrleitung 16 in den Zyklon 14 angesaugt wird.

Im Zyklon 14 wird in an sich bekannter Weise das Pulvervon der Luft getrennt, wobei das Pulver im Zyklon 14 nach unten sinkt und die Luft über die Absaugleitung 18 abströmt.

Der Zyklon 14 ist an seinem unteren Ende mit einem Kugelventil 20 versehen, und sobald dieses Ventil öffnet, was im einzelnen noch erläutert wird, fällt das Pulver, das sich im unteren Bereich des Zyklons angesammelt hat, in einen Pulverbehälter 22, der in Form eines fahrbaren Pulverwagens ausgebildet sein kann.

Es hat sich nun gezeigt daß vor allem wenn momentan größere Pulvermengen abgesaugt werden sollen (z.B. beim Reinigen oder Auskehren der Kabine 10), oder auch wenn mit Pulvern höherer Dichte gearbeitet wird, sich Pulverablagerungen an der Einströmöffnung von der Rohrleitung 16 zum Zyklon 14 bilden können, was Pulververluste zur Folge haben kann. Es wurde ferner beobachtet, daß in derartigen Fällen das Pulver keine ausreichend hohe Einströmgeschwindigkeit in den Zyklon hat, was zu einem schlechten Wirkungsgrad bei der Abscheidung führen kann, da das Pulver dann nicht vollständig oder im wesentlichen vollständig abgeschieden werden kann. In der Regel sind daher bei den bisherigen Zyklonanlagen Nachfilter erforderlich, oder die Abluft darf nicht in die Umwelt abgegeben werden. Der Widerstand von abgelagertem Pulver reduziert die Einströmgeschwindigkeit, wodurch Pulver direkt abgesaugt wird und verloren geht, womit der Abscheidegrad stark vermindert wird.
Um diese Nachteile zu beheben, ist die Rohrleitung (bzw. Rohrleitungen) 16 zwischen der Kabine 10 und dem Zyklon 14 in Form einer Beschleunigungsstrecke ausgebildet mit einer Länge von etwa 0,7-2,0 m, insbesondere etwa o,8-1,0 m.

Der Querschnitt der Beschleunigungsstrecken bzw. Rohrleitungen 16 verjüngt sich von der Kabine 10 in Richtung zu dem Zyklonpaar 14, wie Fig. 2 zeigt.

In den Rohrleitungen 16 wird daher das aus der Kabine 10 angesaugte Pulver soweit beschleunigt, daß es eine ausreichend hohe Einströmgeschwindigkeit in die Zyklone 14 erreicht. Ablagerungen und Verluste von Pulver im Bereich der Eintrittsöffnungen der Zyklone 14 werden hierdurch vermieden, das Pulver wird tangential in die Zyklone eingeblasen und längs der Wand der Zyklone geführt und von der Luft getrennt, welche über die Absaugleitung 18 abgeführt wird.

Es konnte festgestellt werden, daß durch diese Konstruktion ein sehr hoher Abscheidungsgrad und damit eine Luftreinheit in der Absaugleitung 18 erreichtwird, die noch unter den Werten liegt, welche die TA-Luft verlangt.

Am oberen Ende des Ansaugkanales 12 und vor dem Eingang zur Rohrleitung 18 ist, wie Fig. 1 zeigt, ein Sieb, z.B. eine Siebplatte, oder, wie dargestellt, eine Siebpatrone 24 eingebaut, um das aus der Kabine 10 angesaugte Pulver abzusieben, falls eine solche Absiebung gewünscht wird. Eine Absiebung kann aber auch am Ende des Zyklons insbesondere gemeinsam führ mehrere Zyklone vorgenommen werden, wie Fig. 6 zeigt. In diesem Fall ist es nicht erforderlich, am oberen Ende des Ansaugkanales 12 und vor dem Eingang zur Rohrleitung 16 eine Absiebung vorzunehmen, trotzdem wird an dieser Stelle, d.h. vordem Eingang zur Rohrleitung 16 zweckmäßigerweise ein Sieb oder ein Gitter eingesetzt, um Pulverklumpen, die sich insbesondere bei sehr feinem Pulver bilden können, zu unterteilen und zu trennen, wodurch die Absaugung und Beschleunigung des Pulvers in der Beschleunigungsstrecke 16 verbessertund vergleichmäßigt wird. Für diesen Zweck eignen sich grobmaschige Siebe, die als Pulverzerteiler wirken.

In der Außenwand der Kabine 10 bzw. des Ansaugkanales 12 ist eine Öffnung 28 ausgebildet, die durch eine schwenkbare Klappe 26 geschlossen und geöffnet werden kann. In Fig. 1 ist die Öffnung 28 durch die Klappe 26 geschlossen und das Pulver kann ungehindert durch den Ansaugkanal 12 und über die Siebpatrone 24 in die Rohrleitung 16 und damit in den Zyklon 14 einströmen. Wird dagegen die Klappe 26 geöffnet und in die in Fig. 1 gestrichelt dargestellte Position geschwenkt, so ist der Durchgang durch den Ansaugkanal 12 gesperrt und das sich an der Außenseite der Siebpatrone 24 angesammelte Material, z.B. Grobstaub, Fremdpartikel und Flusen, kann ach unten durch die Öffnung 28 hindurch und über einen Kanal oder Stutzen 30 in einen Sack 32 fallen.

Zu diesem Zweck wird die Ansaugung unterbrochen, worauf die Klappe 26 automatisch (z.B. durch ihr Eigengewicht) in die gestrichelte Position geht und den Ansaugkanal 12 sperrt. Der größte Teil des sich an der Außenseite der Filterpatrone 24 angesammelten Materials fällt dann ab, (z.B. etwa 90%) und der Rest kann, wenn gewünscht, durch Rütteln oder durch Abblasen der Siebpatrone 24 mit Luft abgestreift werden.

Wird die Absaugung wieder eingeschaltet, so nimmt die Klappe 28 wieder die in Fig. 1 gezeigte Position ein, in welcher die Öffnung 28 geschlossen und der Durchgang durch den Ansaugkanal 12 freigegeben ist.

Durch die Absaugung über den Ansaugkanal 12 wird nicht das gesamte überschüssige Pulver in der Kabine 10 erfaßt und abgesaugt. Ein Teil dieses Pulvers sinkt nach unten aufden Kabinenboden und wurde bisher von dort mit Hilfe mechanischer Schieber oder auch manuell aus der Kabine 10 abgeführt.

Nach der Erfindung ist hingegen oberhalb des Bodens 34 der Kabine 10 in einem Abstand von etwa 10-20 cm ein feinmaschiges, insbesondere mehrschichtiges Gewebe 36 eingebaut, das praktisch parallel zum Boden 34 verläuft. Zwischen dem Boden 34 und dem Gewebe 36 wird eine Luftkammer 38 gebildet, in welche über eine Leitung 40 Luft, insbesondere Druckluft eingeführt werden kann.

Der Boden 34 und das Gewebe 36 sind um einen Winkel von etwa 8-15°, vorzugsweise etwa 10-12° zur Horizontalen geneigt. Das Gewebe 36 kann selbsttragend oder mit Abstützungen versehen sein, es ist zweckmäßigerweise in einem Rahmen gehalten, der in die Kabine 10 eingesetzt wird im Abstand vom Boden unter Bildung der Luftkammer 38.

Das in der Kabine 10 absinkende und auf das Gewebe 36 fallende Pulver (das also nicht über die Ansaugleitung 12 abgeführt wird), wird von unten her durch die in die Luftkammer 38 eingeführte Luft aufgelockert, so daß es auf dem geneigten Gewebe 36 nach unten gleitet oder fließt und über einen Kanal, ein Rohr oder eine Rutsche 42 zu einem Pulverbehälter oder Pulverwagen 22 abgeführt werden kann. Um Bauhöhe einzusparen, kann auch die Rutsche wie der Kabinenboden mit einem Gewebe mit Luftauflocketung versehen sein. Eine gute Fließfähigkeit des Pulvers wird bereits bei einer Neigung des Gewebes 36 von etwa 8-10° erreicht.

Der Boden 34 selbst ist in derdargestellten Ausführungsform geneigt dargestellt, dies ist aber nicht bedingt erforderlich, in jedem Fall muß aber das Gewebe 36, wie beschrieben, geneigt angeordnet sein.

Das Gewebe kann aus feinmaschigem ein- oder mehrlagigem Textil- oder Kunststoffmaterial bestehen.

Wie Fig. 3 schematisch zeigt, kann der Boden 34 der Kabine 10 in einer Richtung quer zur Zeichenebene von beiden Seiten her innen geneigt ausgebildet sein und in einer längsverlaufenden Rinne 44 endigen, wodurch die Abfuhr des Pulvers noch verbessert werden kann. Das Gewebe ist zweckmäßigerweise dieser Form des Bodens 34 angepaßt, wobei auch in der Rinne 44 zweckmäßigerweise ein Gewebe 36 vorgesehen ist.

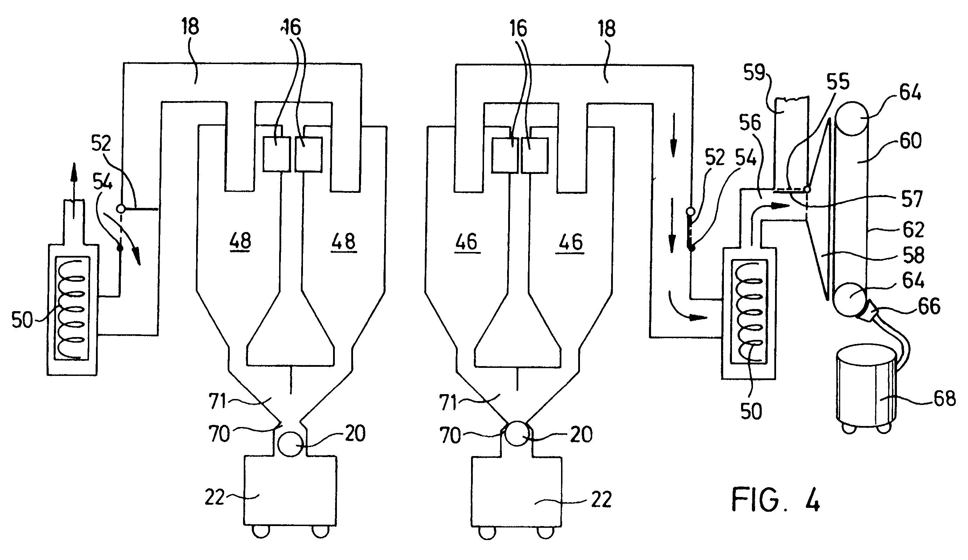

Fig. 4 zeigt schematisch zwei Zyklonpaare 46 und 48. Beide Zyklonpaare sind über ihre Rohrleitungen 16 (welche die Beschleunigungsstrecke bilden) an den Ausgang der Kabine 10 bzw.an den Ausgang des Ansaugkanales 12 angeschlossen. Über beide Zyklonpaare 46 und 48 wird überschüssiges Pulver aus der Kabine 10 abgesaugt, wobei beide in der Regel gleichzeitig betrieben werden. Die beiden Zyklonpaare 46 und 48 können jedoch zwecks Abführung des sich in den Zyklonen angesammelten Pulvers, ohne den Betrieb der Kabine 10 stören zu müssen, alternierend betrieben werden.

Jede der Absaugleitungen 18 der Zyklone führt zu einem Ventilator 50, der den für die Absaugung erforderlichen Unterdruck erzeugt.

In der Wand jeder der Absaugleitungen 18 nach dem zugehörigen Zyklon und vor dem zugehörigen Ventilatorist eine Öffnung 54 ausgebildet die durch eine schwenkbare Kappe 52 geschlossen und geöffnet werden kann.

Es wird nun angenommen, daß das linke Zyklonpaar 48 ausreichend voll ist, d.h. daß es Zeit ist, das Pulver das sich an seinem unteren Ende angesammelt hat, abzuführen und in einen Pulverwagen 22 auszutragen.

Wie dargestellt, ist das untere Ende jedes Zyklonpaares durch ein Kugelventil geschlossen, wobei die Ventilkugel 20 durch den in den Zyklonen herrschenden Unterdruck gegen seinen Ventilsitz 70 angesaugt und angedrückt wird.

Wird nun die Klappe 52 in der Absaugleitung 18 des Zyklones 48 in die in Fig. 4 dargestellte Position geschwenkt bzw. geschaltet, so wird der Durchgang durch die Absaugleitung 18 gesperrt und der Unterdruck im Zyklon 48 bricht zusammen. Die Ventilkugel 20 fällt daraufhin infolge ihres Eigengewichtes nach unten (wobei sie durch geeignete nicht näher dargestellte Mittel entsprechend gehalten wird, damit sie nicht auf den Boden des Pulverwagens 22 fällt) und gibt den Durchgang des Ventils 70 frei, so daß das Pulver aus dem unteren Ende des Zyklons 48 in den Pulverwagen 22 fallen bzw. rieseln kann. Während dieses Vorganges arbeitet das Zyklonpaar 46 weiter und hält damit den Lufthaushalt in der Pulverbeschichtungskabine 10 während dieser Zeit aufrecht.

Solange der Durchgang durch die Absaugleitung 18 des Zyklonpaares 48 durch die Klappe 52 gesperrt ist, ist die Einströmöffnung 54 in der Wand der Absaugleitung 18 geöffnet, so daß aus der Umgebung durch diese Öffnung 54 Luft einströmen und vom Ventilator 50 angesaugt werden kann. Hierdurch kann eine Beschädigung des Ventilators infolge Luftmangels vermieden werden.

Sobald der Zyklon 48 leer ist, wird die Klappe 52 wieder umgeschaltet in eine Position, in der die Öffnung 54 durch die Klappe geschlossen und der Durchgang durch die linke Absaugleitung 18 freigegeben wird. Infolge des sich im Zyklon 48 dann wieder aufbauenden Unterdruckes wird die Ventilkugel 20 wieder gegen ihren Ventilsitz 70 von unten her angesaugt und angedrückt und damit das untere Ende des Zyklons 48 geschlossen.

Die aus dem linken Ventilator 50 in Richtung des Pfeiles abströmende Luft, die schon sehr rein ist, kann an die Atmosphäre abgegeben werden oder ggf. zur Abscheidung von Feinststäuben einem Nachfilter zugeführt werden, wie er rechts in Fig. 4 in Verbindung mit dem Zyklonpaar 46 dargestellt ist.

Das Zyklonpaar 46 wird in derselben Weise geleert, wie eben für das Zyklonpaar 48 beschrieben wurde. In der dargestellten Ausführungsform ist die Klappe 52 in der Absaugleitung 18 in ihrer anderen Endstellung, in der die Öffnung 54 geschlossen und der Durchgang durch die Absaugleitung 18 freigegeben ist. Die Ventilkugel 20 wird von unten her gegen ihren Ventilsitz 70 durch den Unterdruck im Zyklon 46 angesaugt und angedrückt, d.h. das untere Ende des Zyklons 46 ist geschlossen. Sobald die Klappe 52 die Absaugleitung 18 sperrt (was nicht dargestellt ist), wird das Zyklonpaar 46 drucklos, d.h. der Unterdruck fällt zusammen und die Kugel 20 öffnet das Ventil 70, worauf dann derselbe Vorgang abläuft, wie anhand des Zyklonpaares 48 oben beschrieben wurde.

In derin Fig. 4 dargestellten Ausführungsform ist im Zyklonpaar 46 der Durchgang durch die Absaugleitung 18 geöffnet und die vom rechten Ventilator 50 angesaugte und vom Zyklon 46 kommende schon sehr reine Luft wird über eine Leitung 56 mit erweitertem, z.B. trichterförmigem Ende 58 gegen eine Seite eines Bandfilters 60 geblasen. Das Filterband 62 des Bandfilters läuft über Rollen 64 und im Bereich der unteren Rolle 64 werden die Feinststäube, die sich auf dem Filterband 62 abgesetzt haben, abgesaugt. Zur Absaugung kann ein handelsüblicher Staubsauger 68 verwendet werden, dessen Saugkopf 66 entsprechend breit ausgebildet ist, und sich zweckmäßigerweise über die gesamte Breite des Filterbandes in der Richtung quer zur Zeichenebene erstreckt.

Die Form des Trichters 58 kann zweckmäßigerweise ebenfalls an die Abmessungen des Filterbandes 62 hinsichtlich Breite und Länge angepaßt sein. Durch den Staubsauger werden die Feinststäube permanent vom Filterband 62 abgesaugt, das Filter dadurch freigesaugt und damit eine hohe Absaugleistung erzielt.

Modifikationen der vorstehend beschriebenen Ausführungsform sind möglich.

So kann ggf. auf das Bandfilter und den Staubsauger verzichtet werden, falls die in der Absaugluft noch enthaltenen Feinststäube behördlicherseits darin verbleiben dürfen.

Das Sieb 24 ermöglicht einen dauernden frühzeitigen Schmutzaustrag bei nur geringem Kostenaufwand. Das Sieb kann an die jeweiligen Anforderungen, z.B. die Körnung und die Kornverteilung des Pulvers angepaßt und schnell und einfach ausgetauscht werden. Gegebenenfalls kann aber auch ohne Sieb und damit ohne Absiebung gearbeitet werden, wenn dies erwünscht oder nicht erforderlich ist.

Die Erfindung ermöglicht es somit, in einfacher Weise das überschüssige Pulver aus der Pulverbeschichtungskabine rückzugewinnen, wobei das Pulver in den Zylkonen in Luft und Festkörperteile getrennt wird. Das Pulver sinkt ab und wird in einer Beruhigungszone 71 aufgefangen. Die schon sehr reine Luft wird vom Ventilator abgesauft und einem einfachen, aber zuverlässigen Nachfiltersystem in Form eines Bandfilters mit Staubsauger zugeführt.

Die Umschaltmöglichkeit zwischen den beiden Zyklonpaaren ermöglicht eine zyklische Pulverrückgewinnung ohne Stillsetzung der Pulverbeschichtungsanlage.

Es wurde bereits aufgeführt, daß durch die Beschleunigungsstrecke eine sehr gute Abscheidung des Pulvers erreicht wird und daß die Luft in den Absaugleitungen 18 der Zyklone schon sehr rein ist und den Bestimmungen der TA-Luft entspricht bzw. diese noch unterschreitet.

Das in Fig. 4 dargestellte und dem Ventilator 50 nachgeschaltete Bandfilter 60 wird deshalb vorwiegend dann benutzt, wenn im Umluftverfahren gearbeitet wird, d.h. wenn die Luft aus den Zyklonen in die Produktionshalle etc. zurückgeführt wird, um Wärmeenergie zu sparen. Dies gilt vor allem im Winter.

In diesem Fall werden auch die Feinststäube mittels des Bandfilters 60 aus der von den Zyklonen kommenden Luft ausgeschieden, um die Atmosphäre in den Produktionshallen nicht mit den Feinststäuben zu belasten.

Im Sommer hingegen, kann die Luft nach dem Ventilator 50 direkt in die Atmosphäre abgegeben werden.

Zu diesem Zweck ist in die Leitung 56 vor dem Bandfilter 60 eine schwenkbare Klappe 57 eingebaut, durch welche die vom Ventilator 50 kommende Luft entweder zum Bandfilter 60 oder über eine Öffnung 55 in der Wand der Leitung 56 nach außen in eine Abluftleitung 59 geleitet werden kann.

Im Umlauftbetrieb, d.h. vor allem im Winter, nimmt die Klappe 57 die in Fig. 4 gezeigte Stellung ein, in der die Luft über den Trichter 58 zum Bandfilter 60 geleitet wird, im Sommerbetrieb dagegen wird die Klappe in ihre andere Endstellung geschwenkt, in der die Leitung 56 gesperrt, die Öffnung 55 dagegen geöffnet ist. Die Luft wird dann in dieser gestrichelt dargestellten Stellung der Klappe 57 über die Abluftleitung 59 zur Atmosphäre abgegeben.

Bei der Ausführungsform nach Fig. 4 ist für jedes Zyklonpaar 46 bzw. 48 je ein Ventilator 50 vorgesehen. Es kann aber auch für beide Zyklonpaare 46, 48 nur eine gemeinsame Absaugleitung 18 und ein gemeinsamer Ventilator vorgesehen werden mit einer entsprechenden Umschaltung, so daß sowohl beide Zyklonpaare gleichzeitig, oder auch das eine oder das andere Zyklonpaar einzeln betrieben werden kann. Dies hat den Vorteil, daß wenn ein Zyklonpaar abgeschaltet wird, um das in ihm angesammelte Pulver auszutragen, daß dann der Ventilator voll auf das andere Zyklonpaar wirkt, wodurch etwa 90% der ursprünglichen Saugleistung (d.h. wenn beide Zyklonpaare arbeiten) wirksam werden.

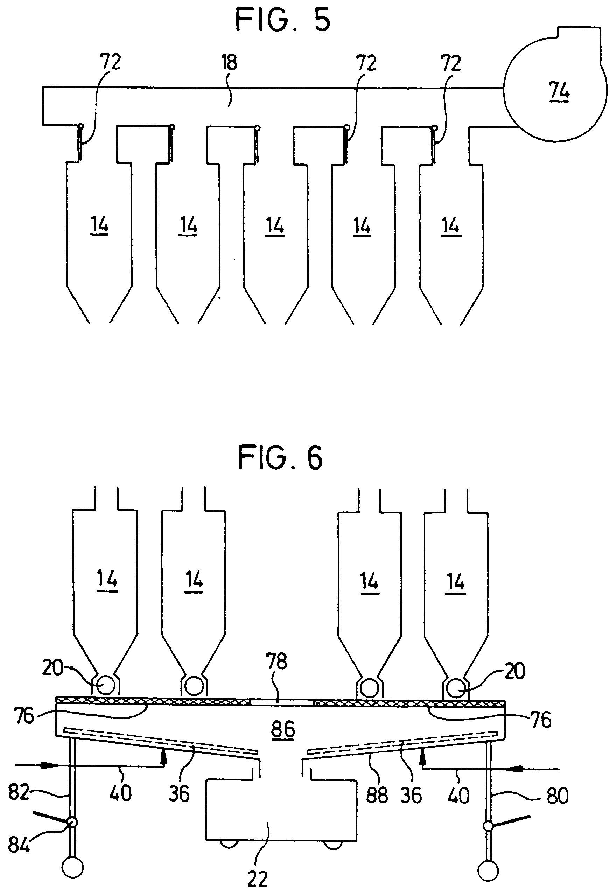

Fig. 5 zeigt eine Weiterbildung einer solchen Ausführungsform, wobei hier beispielsweise fünf Zyklone 14 an eine gemeinsame Absaugleitung 18 gelegt sind, die an ein Sauggebläse oder an einen Ventilator 74 angeschlossen ist, der somit für sämtliche Zyklone 14 gemeinsam ist.

Jeder Zyklon 14 ist an seiner Mündung in die gemeinsame Absaugleitung 18 mit einer Klappe 72 versehen, durch welche die Verbindung vom jeweiligen Zyklon 14 zur gemeinsamen Absaugleitung 18 geöffnet oder geschlossen werden kann. Die Klappe 72 jedes der Zyklone 4 ist individuell und unabhängig von den Klappen der jeweils anderen Zyklone ansteuerbar, so daß je nach Wunsch oder Bedarf die Verbindung von einem oder mehreren oder allen Zyklonen zur gemeinsamen Ansaugleitung 18 geöffnet oder gesperrt werden kann. Es ist damit möglich, jeden beliebigen Zyklon (oder Zyklone) durch Schließung der entsprechenden Klappe (bzw. Klappen) 72 abzuschalten, um das in ihnen angesammelte Pulver auszutragen, während die anderen Zyklone, bei denen die Kappan 72 geöffnet bleiben, weiter betrieben werden.

Fig. 6 zeigt eine Ausführungsform, bei der führ mehrere Zyklone 14 eine gemeinsame Austragrinne 86 vorgesehen ist. Die Austragrinne 86 hat einen geneigten Boden 88, mit einer Neigung von etwa 8-15°, insbesondere etwa 10-12°, wobei in der Mitte des Bodens eine nicht näher bezeichnete Öffnung vorgesehen ist, durch welche das Pulver in einen Behälter, z.B. einen Pulverwagen 22 abgeführt wird.

Die Austragrinne 86 ist vorzugsweise mit einem oder mehreren Sieben 76, insbesondere Feinsieben, versehen, die oberhalb der Rinne angeordnet sind, mit ihr zusammen aber eine Einheit bilden können.

Das aus den Austragenden der Zyklone 14 austretende Pulver wird durch die Siebe 76 abgesiebt, wobei die von den Sieben zurückgehaltenen Schmutzpartikel periodisch oder ständig abgeführt, z.B. abgesaugt werden können.

Die Siebe können auf der Rinne 86 z.B. lose gelagert und mittels eines Vibrators bewegt werden.

Oberhalb des Bodens 88 der Austragrinne 86 sind, wie bei der Kabine 10 nach Fig. 1, feinmaschige, insbesondere mehrschichtige Gewebe 36 eingebaut, die praktisch parallel zum Boden 88 verlaufen. Zwischen dem Boden 88 und den Geweben 36 wird eine nicht näher bezeichnete Luftkammer gebildet, in welche über Leitungen 40 Luft, insbesondere Druckluft eingeführt werden kann. Die Gewebe 36 können selbsttragend oder mit Abstützungen versehen sein, zweckmäßigerweise sind sie in einem Rahmen gehalten, der auf den Boden 88 geeignet aufgesetzt und an diesem befestigt ist.

Die Wirkungsweise dieses Gewebes 36 ist dieselbe, wie in Verbindung mit der Kabine 10 nach Fig. 1 oben beschrieben wurde.

Zur Abführung der über die Leitungen 40 zugeführten Luft sind die Siebe 76 mit geeigneten Durchlaßöffnungen 78 ausgerüstet.

Die Austragrinne 86 und die Siebe 76, die zweckmäßigerweise eine bauliche Einheit bilden, können in Form eines fahrbaren Gestelles 80 ausgebildet sein, so daß die gesamte Einheit unter die Zyklone 14 gefahren und wieder entfernt werden kann. Statt nur die Siebe 76 zu rütteln, kann in diesem Fall vorgesehen sein, das gesamte Gestell mittels eines Vibrators zu bewegen, was den Vorteil hat, daß durch eine solche Vibrationsbewegung auch der Pulvertransport auf den Geweben 36 zum Pulverwagen 22 unterstützt und erleichtert wird.

Die Füße 82 des Gestelles 80 sind zweckmäßigerweise mit einer nur schematisch angedeuteten Kniehebelübersetzung 84 ausgestattet, die es ermöglicht, mit einem Handgriff, die Füße 82 zu verlängern und zu verkürzen, so daß die Hohe des Gestells und damit die Lage der Siebe und der Austragrinne schnell und einfach auf! die Hohe der Austragenden der Zyklone 14 eingestellt werden kann.

## Patentansprüche

1. Verfahren zur Rückgewinnung von überschüssigem Pulver aus der Kabine einer Pulverbeschichtungsanlage, wobei das überschüssige Pulver mittels eines Ventilators aus der Kabine über Zyklone abgesaugt wird, dadurch gekennzeichnet, daß mindestens zwei Zyklone jeweils über ein separates Rohr mit der Kabine verbunden sind und daß das Pulver zwischen dem Austritt aus der Kabine und dem jeweiligen Eintritt in jeden Zyklon beschleunigt wird.

2. Verfahren nach Anspruch 1, dadurch gekennzeichnet, daß das von der Absaugung nicht erfaßte und daher auf den Boden der Kabine fallende Pulver am Boden mittels zugeführter Luft aufgelockert und nach außen abgeführt wird.

3. Vorrichtung zur Durchführung des Verfahrens nach Anspruch 1, mit einer Pulverbeschichtungsanlage bestehend aus einer Kabine (10) zum Beschichten vorgegebener Gegenstände mit Pulver und mindestens zwei Zyklonen (14, 46, 48) zur Absaugung und Rückgewinnung von überschüssigem Pulver, dadurch gekennzeichnet, daß zwischen der Kabine (10) und jedem Zyklon (14, 46, 48) eine separate Beschleunigungsstrecke in Form eines Rohres (16) eingebaut ist wobei jedes Rohr den Ausgang der Kabine (10) mit dem Eingang des jeweiligen Zyklons (14, 46, 48) verbindet und der Querschnitt jedes Rohres sich in Richtung von der Kabine (10) zu dem jeweiligen Zyklon (14, 46, 48) verjüngt.

4. Vorrichtung nach Anspruch 3, dadurch gekennzeichnet, daß die Länge jedes Rohres (16) etwa 0,7 - 1,2m, insbesondere etwa 0,8 - 1,0m beträgt.

5. Vorrichtung nach Anspruch 3 oder 4, wobei das Pulver aus der Kabine über einen Ansaugkanal angesaugt wird, dadurch gekennzeichnet, daß zur Absiebung des Pulvers am Ende des Ansaugkanales (12) und vor jedem Rohr (16) ein Sieb (24), insbesondere eine Siebplatte oder eine Siebpatrone eingebaut ist.

6. Vorrichtung nach Anspruch 5, dadurch gekennzeichnet, daß in der Außenwand des Ansaugkanales (12) eine schwenkbare Klappe (26) eingebaut ist, durch welche in einer Endstellung der Ansaugkanal (12) gesperrt und eine Verbindung nach außen zu einem Flusenbehälter (32) geöffnet ist, während in der anderen Endstellung der Klappe die Verbindung zum Flusenbehälter (32) geschlossen und der Durchgang durch den Ansaugkanal (12) geöffnet ist.

7. Vorrichtung zur Durchführung des Verfahrens nach Anspruch 2, dadurch gekennzeichnet, daß der Boden (34) der Kabine (10) geneigt ist, daß im Abstand über dem Boden ein feinmaschiges Gewebe (36) angeordnet ist, und daß in den Raum (38) zwischen dem Boden und dem Gewebe Luft einführbar ist zur Auflockerung des auf dem Gewebe (36) sich absetzenden Pulvers.

8. Vorrichtung nach Anspruch 7, dadurch gekennzeichnet, daß die Neigung des Gewebes (36) etwa 8 - 15°, insbesondere 10 - 12° beträgt.

9. Vorrichtung nach einem der Ansprüche 3 - 8, dadurch gekennzeichnet, daß in der Absaugleitung (18) zwischen jedem Zyklon (46, 48) und dem ihm zugeordneten Ventilator (50) eine Klappe (52) eingebaut ist, durch welche in einer Endstellung der Durchgang durch die Absaugleitung (18) geöffnet ist, während in der anderen Endstellung der Klappe (52) dieser Durchgang gesperrt und eine Öffnung (54) nach außen zur Ansaugung von Umgebungsluft durch den Ventilator freigegeben ist.

10. Vorrichtung nach Anspruch 9, dadurch gekennzeichnet, daß am Auslaß jedes Zyklons (14, 46, 48) ein Kugelventil (20) angeordnet ist, dessen Ventilkugel durch den Unterdruck in der Absaugleitung (18) in geschlossener Stellung gehalten ist, während bei gesperrter Ansaugleitung (18) die Ventilkugel den Auslaß des jeweiligen Zyklons freigibt.

11. Vorrichtung nach Anspruch 10, dadurch gekennzeichnet, daß die Ventilkugel des Kugelventiles (20) in Leichtbauweise, insbesondere hohl, ausgeführt ist und aus einem Kunststoffmaterial, z.B. PVC besteht

12. Vorrichtung nach einem der Ansprüche 3 - 10, dadurch gekennzeichnet, daß dem Ventilator (50) ein Bandfilter (60) nachgeschaltet ist, aufdessen umlaufendes Filterband (62) die noch verbleibenden Feinststäube vom Ventilator (50) aufgeblasen werden, und daß diese auf dem Filterband (62) abgeschiedenen Feinststäube vom Filterband mittels eines Staubsaugers (68) absaugbar sind.

13. Vorrichtung nach Anspruch 12, dadurch gekennzeichnet, daß in der vom Ventilator (50) zum Bandfilter (60) führenden Leitung (56) eine schwenkbare Klappe (57) eingebaut ist, durch welche in der einen Endstellung der Durchgang durch die Leitung (56) freigegeben ist, während in der anderen Endstellung der Klappe (57) die Leitung (56) gesperrt und eine Öffnung (55) in der Wand der Leitung (56) freigegeben ist zur Abfuhr der Luft über die Öffnung (55) zur Atmosphäre.

14. Vorrichtung nach einem der Ansprüche 3 - 13, dadurch gekennzeichnet, daß eine Mehrzahl von Zyklonen (14) mit einer gemeinsamen Ansaugleitung (18) und einem gemeinsamen Ventilator (74) versehen ist, daß ferner jeder Zyklon (14) eine individuell ansteuerbare Klappe (72) aufweist, durch welche die Verbindung von dem jeweiligen Zyklon (14) zur gemeinsamen Ansaugleitung (18) individuell und unabhängig von den jeweils anderen Zyklonen zu öffnen und zu schließen ist.

15. Vorrichtung nach einem der Ansprüche 3 - 14, dadurch gekennzeichnet, daß für eine Mehrzahl von Zyklonen (14) eine gemeinsame Austrag-Rinne (86) vorgesehen ist, die unterhalb der Austragenden der Zyklone anbringbar ist, und aus der das aus den Zyklonen ausgetragene Pulver in einen gemeinsamen Behälter (22), z.B. einen Pulverwagen, abführbar ist.

16. Vorrichtung nach Anspruch 15, dadurch gekennzeichnet, daß die Austrag-Rinne (86) mit wenigstens einem Sieb (76), insbesondere einem Feinsieb, versehen ist, das oberhalb der Austrag-Rinne (86) unmittelbar unterhalb der Austragenden der Zyklone (14) angeordnet ist.

17. Vorrichtung nach Anspruch 15, dadurch gekennzeichnet, daß obehalb des geneigten Bodens (88) der Austrag-Rinne (86) ein feinmaschiges Gewebe (36) angeordnet ist, und daß in den Raum zwischen dem Boden (88) und dem Gewebe (36) Luft einführbar ist, zur Auflockerung des auf dem Gewebe (36) sich absetzenden Pulvers.

18. Vorrichtung nach einem der Ansprüche 14 - 17, dadurch gekennzeichnet, daß die Austrag-Rinne (86) und das Sieb (76) in Form eines einteiligen, fahrbaren Gestelles (80) ausgebildet sind, dessen Füße (82) z.B. mit einer Kniehebelverbindung (84) versehen sind zum schnellen und einfachen Heben und Absenken des Siebes (76) und der Austrag-Rinne (86).

## Claims

1. Process for recovering excess powder from the cabinet of a powder coating plant, wherein the excess powder is drawn from the cabinet by means of a ventilator via cyclones, characterised in that there are at least two cyclones connected to the cabinet each via a separate tube and in that the powder is accelerated between the outlet from the cabinet and the respective inlet to each cyclone.

2. Process according to claim 1, characterised in that the powder not captured by the withdrawal and therefore falling on the floor of the cabinet is loosened on the floor by means of supplied air and is removed to the outside.

3. Device for carrying out the process according to claim 1, with a powder coating plant consisting of a cabinet (10) for coating given objects with powder and at least two cyclones (14, 46, 48) for withdrawing and recovering excess powder, characterised in that a separate acceleration path in the form of a tube (16) is incorporated between the cabinet (10) and each cyclone (14, 46, 48), wherein each tube connects the outlet from the cabinet (10) to the inlet of the respective cyclone (14, 46, 48) and the cross-section of each tube tapers in the direction from the cabinet (10) to the respective cyclone (14, 46, 48).

4. Device according to claim 3, characterised in that the length of each tube (16) is about 0.7-1.2 m, in particular about 0.8-1.0 m.

5. Device according to claim 3 or 4, wherein the powder is drawn from the cabinet via an intake channel, characterised in that a sieve (24), in particular a sieve plate or a sieve cartridge, is incorporated to sift the powder at the end of the intake channel (12) and before each tube (16).

6. Device according to claim 5, characterised in that a pivotable flap (26) is incorporated in the outer wall of the intake channel (12), which flap (26) in one end position closes the intake channel (12) and opens a connection outwards to a fluff container (32), whereas in the other end position of the flap, the connection to the fluff container (32) is closed and the passage through the intake channel (12) is open.

7. Device for carrying out the process according to claim 2, characterised in that the floor (34) of the cabinet (10) is inclined, in that a fine-mesh fabric (36) is arranged at a distance above the floor, and in that air can be introduced into the space (38) between the floor and the fabric to loosen the powder settling on the fabric (36).

8. Device according to claim 7, characterised in that the incline of the fabric (36) is about 8-15°, in particular 10-12°.

9. Device according to one of claims 3 - 8, characterised in that a flap (52) is incorporated in the suction pipe (18) between each cyclone (46, 48) and the ventilator (50) assigned to it, which flap (52) opens the passage through the suction pipe (18) in one end position, whereas in the other end position of the flap (52) this passage is closed and an opening (54) is uncovered outwards to draw in ambient air through the ventilator.

10. Device according to claim 9, characterised in that a ball valve (20) is arranged at the outlet of each cyclone (14, 46, 48), the valve ball of the ball valve (20) being retained in the closed position by the negative pressure in the suction pipe (18), whereas the valve ball uncovers the outlet of the particular cyclone when the suction pipe (18) is closed.

11. Device according to claim 10, characterised in that the valve ball of the ball valve (20) has a light construction, in particular is hollow, and consists of a plastics material, for example PVC.

12. Device according to one of claims 3 - 10, characterised in that a band filter (60), onto the circulating filter band (62) of which the extremely fine dusts which still remain are blown by the ventilator (50), is arranged downstream of the ventilator (50), and in that these extremely fine dusts deposited on the filter band (62) can be removed from the filter band by suction by means of a vacuum cleaner (68).

13. Device according to claim 12, characterised in that a pivotable flap (57) is incorporated in the pipe (56) leading from the ventilator (50) to the band filter (60), which flap (57) uncovers the passage through the pipe (56) in one end position, whereas in the other end position of the flap (57) the pipe (56) is closed and an opening (55) in the wall of the pipe (56) is uncovered to lead the air to the atmosphere via the opening (55).

14. Device according to one of claims 3 - 13, characterised in that a plurality of cyclones (14) are provided with a common suction pipe (18) and a common ventilator (74), in that furthermore each cyclone (14) has an individually controllable flap (72), which is to open and close the connection from the particular cyclone (14) to the common suction pipe (18) individually and independently of the other cyclones in each case.

15. Device according to one of claims 3 - 14, characterised in that a common discharge channel (86), which can be attached below the discharge ends of the cyclones, is provided for a plurality of cyclones (14), and from which the powder discharged from the cyclones into a common container (22), for example a powder wagon, can be removed.

16. Device according to claim 15, characterised in that the discharge channel (86) is provided with at least one sieve (76), in particular a fine sieve, which is arranged above the discharge channel (86) directly below the discharge ends of the cyclones (14).

17. Device according to claim 15, characterised in that a fine-mesh fabric (36) is arranged above the inclined floor (88) of the discharge channel (86), and in that air can be introduced into the space between the floor (88) and the fabric (36) to loosen the powder settling on the fabric (36).

18. Device according to one of claims 14 - 17, characterised in that the discharge channel (86) and the sieve (76) are designed in the form of a one-part movable frame (80), the feet (82) of which are provided, for example with a toggle connection (84), for rapid and simple raising and lowering of the sieve (76) and the discharge channel (86).

## Revendications

1. Procédé pour la récupération de la poudre excédentaire de la cabine d'une installation de revêtement par poudre, la poudre excédentaire étant évacuée de la cabine par aspiration au moyen d'un ventilateur et en passant par un séparateur à cyclone, caractérisé en ce qu'au moins deux séparateurs à cyclone sont reliés à la cabine par un tube séparé et que la poudre est accélérée entre la sortie de la cabine et la respective entrée dans chaque séparateur à cyclone.

2. Procédé selon la revendication 1, caractérisé en ce que la poudre non recueillie par l'aspiration et tombant donc sur le fond de la cabine est décollée du fond par apport d'air et évacuée vers l'extérieur.

3. Dispositif pour la mise en oeuvre du procédé selon la revendication 1, comprenant une installation de revêtement par poudre constituée d'une cabine (10) pour revêtir de poudre des objets donnés, et au moins deux séparateurs à cyclone (14, 46, 48) pour évacuer par aspiration et récupérer la poudre excédentaire, caractérisé en ce qu'un parcours d'accélération séparé sous la forme d'un tube (16) est monté entre la cabine (10) et chaque séparateur à cyclone (14, 46, 48), parcours qui relie la sortie de la cabine (10) à l'entrée de chaque séparateur à cyclone (14, 46, 48) et dont la section de chaque tube se rétrécit depuis la cabine (10) en direction de chaque séparateur à cyclone (14, 46, 48).

4. Dispositif selon la revendication 3, caractérisé en ce que la longueur de chaque tube (16) est d'environ 0,7 à 1,2 m, notamment d'environ 0,8 à 1,0 m.

5. Dispositif selon la revendication 3 ou 4, dans lequel la poudre est aspirée hors de la cabine par l'intermédiaire d'un canal d'aspiration, caractérisé en ce qu'afin de tamiser la poudre, un tamis (24), notamment une plaque de tamisage ou une cartouche de tamisage, est monté à l'extrémité du canal d'aspiration (12) et avant chaque tube (16).

6. Dispositif selon la revendication 5, caractérisé en ce qu'un clapet pivotant (26) est monté dans la paroi du canal d'aspiration (12), le canal d'aspiration (12) étant fermé et une liaison vers l'extérieur en direction d'un récipient de débourrage (32) étant ouverte dans une position finale du clapet, tandis que, dans l'autre position finale du clapet, la liaison vers le récipient de débourrage (32) est fermée et le passage par le canal d'aspiration (12) est ouvert.

7. Dispositif pour la mise en oeuvre du procédé selon la revendication 2, caractérisé en ce que le fond (34)de la cabine (10) est incliné, en ce qu'une toile à mailles fines (36) est disposée à distance au-dessus du fond, et en ce que de l'air peut être introduit dans l'espace (38) entre le fond et la toile, afin de décoller la poudre qui se dépose sur la toile (36).

8. Dispositif selon la revendication 7, caractérisé en ce que l'inclinaison de la toile (36) est d'environ 8 à 15°, notamment d'environ 10 à 12°.

9. Dispositif selon l'une des revendications 3 à 8, caractérisé en ce qu'un clapet (52) est monté dans la conduite d'aspiration (18) entre chaque séparateur à cyclone (46, 48) et le ventilateur associé (50), le passage par la conduite d'aspiration (18) étant ouvert dans une position finale du clapet, tandis que, dans l'autre position finale du clapet (52), ce passage est fermé et une ouverture (54) vers l'extérieur est dégagée afin d'aspirer de l'air ambiant à travers le ventilateur.

10. Dispositif selon la revendication 9, caractérisé en ce qu'une soupape à bille (20) est disposée à la sortie de chaque séparateur a cyclone (14, 46, 48), la bille étant maintenue en position fermée par la dépression dans la conduite d'aspiration (18), tandis que la bille dégage la sortie de chaque séparateur lorsque la conduite d'aspiration (18) est fermée.

11. Dispositif selon la revendication 10, caractérisé en ce que la bille de la soupape à bille (20) est réalisé légère, notamment creuse, et est constituée d'une matière plastique, PVC par exemple.

12. Dispositif selon l'une des revendications 3 à 10, caractérisé en ce que le ventilateur (50) est suivi d'un filtre passe-bande (60), sur la bande filtrante (62) circulante duquel sont insufflées les poussières fines résiduelles en provenance du ventilateur (50), et en ce que ces poussières fines déposées sur la bande filtrante (62) peuvent être enlevées par aspiration de la bande filtrante au moyen d'un aspirateur de poussières (68).

13. Dispositif selon la revendication 12, caractérisé en ce qu'un clapet pivotant (57) est monté dans la conduite (56) menant du ventilateur (50) au filtre passe-bande (60), le passage par la conduite (56) étant dégagé dans une position finale du clapet, tandis que, dans l'autre position finale du clapet (57), la conduite (56) est fermée et une ouverture (55) de la paroi de la conduite (56) est dégagée afin d'évacuer l'air, par l'ouverture (55), vers l'atmosphère.

14. Dispositif selon l'une des revendications 3 à 13, caractérisé en ce que plusieurs séparateurs à cyclone (14) sont munis d'une conduite d'aspiration commune (18) et d'un ventilateur commun (74), en ce que chaque séparateur à cyclone (14) présente en outre un clapet (72) individuellement commandable, qui permet d'ouvrir et de fermer, individuellement et indépendamment des autres séparateurs, la liaison du séparateur à cyclone (14) respectif avec la conduite d'aspiration commune (18).

15. Dispositif selon l'une des revendications 3 à 14, caractérisé en ce qu'une goulotte de déchargement commune (86) est prévue pour plusieurs séparateurs à cyclone (14), et peut être disposée en dessous des extrémités de déchargement des séparateurs, et par celle-ci la poudre déchargée des séparateurs peut être évacuée dans un récipient commun (22), par exemple un chariot de poudre.

16. Dispositif selon la revendication 15, caractérisé en ce que la goulotte de déchargement (86) est pourvue d'eau moins un tamis (76), notamment un tamis fin, qui est disposé au-dessus de la goulotte de déchargement (86), juste en dessous des extrémités de déchargement des séparateurs à cyclone (14).

17. Dispositif selon la revendication 15, caractérisé en ce qu'une toile à maille fines (36) est disposée au-dessus du fond incliné (88) de la goulotte de déchargement (86), et en ce que de l'air peut être introduit dans l'espace entre le fond (88) et la toile (36), afin de décoller la poudre qui se dépose sur la toile (36).

18. Dispositif selon l'une des revendications 14 à 17, caractérisé en ce que la goulotte de déchargement (86) et le tamis (76) sont réalisés sous la forme d'un bâti mobile (80) d'un seul tenant, dont les pieds (82) sont par exemple pourvus d'une transmission à genouillère (84), afin de relever et abaisser d'une manière rapide et simple le tamis (76) et la goulotte de déchargement (86).
